(19)

**Europäisches Patentamt**
**European Patent Office**
**Office européen des brevets**

(11) **EP 1 794 851 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(21) Anmeldenummer: 05785638.7

(22) Anmeldetag: **20.09.2005**

(51) Int Cl.:
***H01S 3/098*** (2006.01)

(86) Internationale Anmeldenummer:
**PCT/AT2005/000377**

(87) Internationale Veröffentlichungsnummer:
**WO 2006/034519 (06.04.2006 Gazette 2006/14)**

(54) **MEHRFACHREFLEXIONS-VERZÖGERUNGSSTRECKE FÜR EINEN LASERSTRAHL SOWIE RESONATOR BZW. KURZPULSLASERVORRICHTUNG MIT EINER SOLCHEN VERZÖGERUNGSSTRECKE**

MULTIPLE-REFLECTION DELAY LINE FOR A LASER BEAM AND RESONATOR OR SHORT PULSE LASER DEVICE COMPRISING A DELAY LINE OF THIS TYPE

LIGNE DE RETARD A REFLEXION MULTIPLE POUR UN FAISCEAU LASER ET RESONATEUR OU DISPOSITIF LASER A IMPULSIONS COURTES COMPRENANT LADITE LIGNE DE RETARD

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.09.2004 AT 16192004**

(43) Veröffentlichungstag der Anmeldung:
**13.06.2007 Patentblatt 2007/24**

(73) Patentinhaber: **Femtolasers Produktions GmbH**
**2100 Korneuburg (AT)**

(72) Erfinder:
• **TEMPEA, Gabriel**
  **A-1150 Wien (AT)**
• **STINGL, Andreas**
  **A-2100 Korneuburg (AT)**

(74) Vertreter: **Sonn & Partner Patentanwälte**
**Riemergasse 14**
**1010 Wien (AT)**

(56) Entgegenhaltungen:
**EP-A- 0 973 236          US-A- 6 055 261**
**US-A1- 2002 118 718    US-B1- 6 256 434**
**US-B1- 6 658 036**

EP 1 794 851 B1

## Beschreibung

Gebiet der Erfindung

Die Erfindung betrifft eine Mehrfachreflexions-Verzögerungsstrecke für einen Laserstrahl, mit Spiegelelementen zur mehrfachen Reflexion des Laserstrahls, um die Dimensionen eines Laserresonators bei vorgegebener optischer Länge zu reduzieren.

Weiters bezieht sich die Erfindung auf einen Resonator sowie auf eine Kurzpuls-Laservorrichtung mit einer solchen Verzögerungsstrecke.

Hintergrund der Erfindung

Kurzpuls-Laservorrichtungen haben in jüngster Zeit immer größeres Interesse gefunden, da im Hinblick auf die extrem kurzen Impulsdauern im Femtosekunden-(fs)-Bereich, bei Impulsspitzenleistungen von > 1 MW, die verschiedensten Anwendungen in Forschung und Industrie ermöglicht werden. So können derartige Kurzpuls-Laservorrichtungen mit Impulsdauern im fs-Bereich zur zeitaufgelösten Untersuchung der Wechselwirkung zwischen elektromagnetischer Strahlung und Materie verwendet werden. Andererseits können im Hinblick auf die zunehmende Miniaturisierung in der Materialbearbeitung feinste Strukturen exakt und mit hoher Geschwindigkeit gefertigt werden. Femtosekunden-Laservorrichtungen mit hoher Ausgangspulsenergie und hoher Wiederholfrequenz können hiefür ideal eingesetzt werden. Wünschenswert ist dabei eine Laservorrichtung, die Laserimpulse mit einer Impulsdauer in der Größenordnung von 10 fs sowie mit einer Energie von beispielsweise 25 bis 30 nJ erzeugt. Häufig werden auch relativ langsame Impulswiederholraten (in der Größenordnung von 10 MHz anstatt beispielsweise 80 MHz) bei einem üblichen Titan-Saphir-fs-Laser erwünscht, da dann eine höhere Impulsspitzenleistung bzw. eine höhere Impulsenergie erzielt werden kann, was für die Materialbearbeitung von Interesse ist. Derartige vergleichsweise niedrige Repetitionsraten, die umgekehrt eine relativ lange Impulsumlaufzeit im Laserresonator bedeuten, bringen jedoch rein rechnerisch eine entsprechende Erhöhung der Länge des Resonators mit sich.

Grundsätzlich gilt hier, dass Laserresonatoren zur Erreichung einer vorgegebenen Wiederholfrequenz $f_r$ für eine vorgegebene optische Länge $L_r = c_0/2f_r$, mit $c_0$ = Laser-Lichtgeschwindigkeit, aufweisen müssen. In der Regel wird in Femtosekundenoszillatoren diese optische Länge $L_r$ durch eine aus Luft bestehende Propagationsstrecke bestimmt. Um die Dimensionen des Resonators zu reduzieren, wurde bereits vorgeschlagen, in einem so genannten Mehrfachreflexions-Teleskop die Impulsumlaufzeit des Laserstrahls durch mehrmalige Reflexionen an einander gegenüberstehenden Spiegeln zu erhöhen, vgl. z.B. WO 2003/098314 A2, und US 6 055 261 A.

Aber auch ohne spezielle verkürzte Impulswiederholrate ist es ein Anliegen beim Bauen von Laservorrichtungen, insbesondere Kurzpuls-Laservorrichtungen, kompakte, kleine Abmessungen zu erzielen, wobei auch hier das Prinzip der Mehrfachreflexionen an Spiegelelementen selbstverständlich einsetzbar ist.

Zusammenfassung der Erfindung

Ziel der Erfindung ist es nun, eine Mehrfachreflexions-Verzögerungsstrecke wie eingangs angegeben bzw. einen Laserresonator und eine Kurzpuls-Laservorrichturig mit einer solchen Verzögerungssrecke vorzuschlagen, wobei besonders kleine, kompakte Ausbildungen erzielbar sind. Die Erfindung beruht dabei auf der Erkenntnis, dass die physikalische Länge eines Resonators dann reduziert werden kann, wenn keine Luft-Propagationsstrecke, wie bei herkömmlichen Kurzpuls-Laservorrichtungen üblich, eingesetzt wird, bei der die optische Länge und die physikalische Länge im Wesentlichen gleich sind, sondern wenn eine Propagation in einem Medium verwendet wird, das einen gegenüber Luft höheren Brechungsindex aufweist, wobei dann die physikalische Länge umgekehrt proportional zu diesem Brechungsindex angegeben d.h. reduziert werden kann. Weiters basiert die Erfindung auf dem Prinzip, dass bei Verwendung eines solchen Mediums und bei Vorliegen von Grenzflächen zwischen diesem Medium und der Umgebung (Luft), mit entsprechend unterschiedlichen Brechungszahlen, eine Totalreflexion für den Laserstrahl ermöglicht wird, wenn er mit einem entsprechend schrägen Winkel auf diese Grenzfläche auftrifft. Dieser kritische Winkel der Totalreflexion an einer Grenzfläche hängt bekanntlich vom Quotienten der beiden Brechungszahlen ab.

Die erfindungsgemäße Mehrfachreflexion-Verzögerungsstrecke der eingangs angeführten Art ist demgemäß dadurch gekennzeichnet, dass die Spiegelelemente durch zwei einander gegenüberliegende, sich längserstreckende polierte Oberflächen eines sich in einer Richtung erstreckenden Glaselements, vorzugsweise eines Glasstabs, gebildet sind, das bzw. der weiters eine polierte Laserstrahl-Eintrittsfläche sowie eine polierte Laserstrahl-Austrittsfläche aufweist, wobei sich die Spiegelelement-Oberflächen des Glaselements zwischen der Eintrittsfläche und der Austrittsfläche befinden und mit dem Laserstrahl einen Winkel bilden, der zumindest gleich groß dem kritischen Winkel für Totalreflexion ist, wogegen die Eintrittsfläche und die Austrittsfläche mit dem Laserstrahl einen Winkel definieren, der kleiner als der kritische Winkel für Totalreflexion ist.

Mit einer derartigen Ausbildung kann der vorstehenden Zielsetzung in vorteilhafter Weise entsprochen werden, und es wird im Vergleich zu einer Luft-Propagationsstrecke eine Reduktion der physikalischen Länge entsprechend dem durch den Glas-Brechungsindex n gegebenen Quotienten 1/n sowie weiters entsprechend einem Faktor $1/\sin\theta_1$ erzielt, wobei der Winkel $\theta_1$ jener Winkel ist, unter dem der Laserstrahl jeweils auf die Grenzfläche Glaselement/Umgebung, d.h. die planpolierte Oberfläche des Glaselements auftrifft; der Laserstrahl wird somit im Glaselement entsprechend seiner Mehrfachreflexion und in Entsprechung zum Brechungsindex des Glasmaterials des Glaselements "verzögert", wobei beispielsweise bei Vorliegen eines Glasstabes mit einer vorgegebenen Länge und Dicke sowie einem vorgegebenen Brechungsindex je nach Auftreffwinkel $\theta_1$ eine fast doppelt so große optische Weglänge erzielbar ist, was einer entsprechenden zeitlichen Verzögerung des Laserstrahls beim Durchlaufen der Verzögerungsstrecke, beispielsweise bei einem ca. 70 mm langen Glasstab in der Größenordnung von 40 ns, entspricht. Mit anderen Worten müsste, um dieselbe Verzögerung bzw. dieselbe optische Weglänge zu erzielen, eine gerade Propagationsstrecke in Luft fast doppelt so lange sein wie die vorliegende Verzögerungsstrecke. Wenn nicht nur eine Verzögerungsstrecke vorgesehen wird, sondern mehrere Verzögerungsstrecken in einem Laserresonator bzw. in einer Laservorrichtung eingebaut werden, kann die Resonatorlänge bzw. die Größe der Laservorrichtung beträchtlich reduziert werden.

Aus Herstellungsgründen sowie auch, um einheitliche Verhältnisse bei der Totalreflexion sicher zu stellen, wird bevorzugt vorgesehen, dass die polierten Spiegelelement-Oberflächen des Glaselements zueinander parallel sind. Die polierten Spiegelelement-Oberflächen des Glaselements weisen dann weiters bevorzugt einen Abstand voneinander auf, der zumindest das Dreißigfache der mittleren Wellenlänge des Laserstrahls im Glaselement beträgt. Dadurch kann die Anzahl der Totalreflexionen im Glaselement optimiert werden.

Aus Symmetriegründen ist es weiters günstig, wenn die Laserstrahl-Eintrittsfläche und die Laserstrahl-Austrittsfläche des Glaselements zueinander parallel sind. Dadurch kann die durch das Glaselement gebildete Verzögerungsstrecke oder -komponente in gleicher Weise von beiden Seiten her betrieben werden.

Ultrakurze Laserimpulse, mit Impulsdauern im Pikosekunden- und Femtosekundenbereich, besitzen im Frequenzbereich ein breites Spektrum. Pulse mit Spektren, die eine ganze optische Oktave (z.B. zwischen 500 und 1000 nm) überspannen, sind demonstriert worden, und Kurzpuls-Laservorrichtungen, die Pulse mit einer spektralen Breite von ca. 200 nm (um eine mittlere Wellenlänge von 800 nm zentriert) liefern, sind bereits kommerziell verfügbar. Um im Zeitbereich einen kurzen Puls zu bilden, müssen die Frequenzkomponenten breitbandiger Signale in Koinzidenz sein. Aufgrund der Wellenlängenabhängigkeit (auch "Dispersion" genannt) des Brechungsindexes werden unterschiedliche Spektralkomponenten beim Durchlaufen eines dichten optischen Mediums unterschiedlich verzögert. Um diesen Effekt quantitativ zu beschreiben, ist die Gruppenverzögerungsdispersion (group delay dispersion - GDD), nachstehend kurz GDD genannt, als die zweite Ableitung der spektralen Phase nach der Kreisfrequenz eingeführt worden. Die Dauer eines Laserpulses bleibt beim Durchlaufen eines optischen Systems unverändert, wenn die resultierende GDD des Systems gleich Null ist. Wenn jedoch das System eine Gesamt-GDD $\neq 0$ hat, dann hat die Dauer des Pulses am Ausgang des optischen Systems einen anderen Wert als am Eingang. Um dieser Pulsveränderung entgegenzuwirken, muss die GDD im optischen System kompensiert werden, d.h. es muss eine GDD mit dem gleichen Betrag, aber mit entgegengesetztem Vorzeichen eingeführt werden. Für die Durchführung einer solchen Dispersionskompensation sind verschiedene optische Komponenten entwickelt worden: PrismenPaare, Gitter-Paare und dispersive Spiegel (vgl. z.B. US 5 734 503 A). Dank ihrer großen Bandbreite, Benutzerfreundlichkeit und Kompaktheit werden die dispersiven Vielschicht-Spiegel (die üblicherweise "gechirpte" Spiegel - chirped mirrors - CMs - genannt werden) immer häufiger sowohl für wissenschaftliche als auch für industrielle Anwendungen eingesetzt.

Die vorliegende optische Verzögerungskomponente ermöglicht nun nicht nur eine sehr effektive Verzögerung der Laserpulse, es ist auch in Weiterbildung der Erfindung eine genaue und einfache Kontrolle der GDD möglich, wobei insbesondere die von der Glas-Propagationsstrecke eingeführte Gruppenverzögerungsdispersion in vorteilhafter Weise teilweise oder ganz kompensiert oder sogar überkompensiert werden kann.

Es wurde bereits erkannt, dass mehrschichtige Interferenzfilter für die Kontrolle der GDD eingesetzt werden können (vgl. Gires F, Tournois P (1964): Interférometre utilisable pour la compensation d'impulsions lumineuses modulées en fréquence. C.R. Hebd. Acad. Sci. 258: 6112-6115). Bei der Reflexion an einem CM-Spiegel dringen die verschiedenen Wellenlängenkomponenten des Laserstrahls unterschiedlich tief in die Schichten des Spiegels ein, bevor sie reflektiert werden. Dadurch werden die verschiedenen Frequenzkomponenten unterschiedlich lang, entsprechend der jeweiligen Eindringstiefe, verzögert. Weil viele optische Komponenten eine positive GDD aufweisen, wird zur GDD-Kompensation meistens eine negative GDD benötigt. Um eine negative GDD zu erzielen, werden die kurzwelligen Wellenpakete in den oberen Schichten eines CM-Spiegels reflektiert, während die langwelligen Anteile tiefer in den CM-Spiegel eindringen, bevor sie reflektiert werden. Auf diese Weise werden die langwelligen Frequenzkomponenten gegenüber den kurzwelligen Komponenten zeitlich verzögert, was zu der erwünschten negativen GDD führt. Aber es können nicht nur gechirpte Spiegel (d.h. CM-Spiegel), sondern auch Resonator-ähnliche Mehrschichtfilter (Resonanz-Dispersiv-Spiegel) zur Kontrolle der GDD eingesetzt werden, vgl. den vorstehend erwähnten Artikel von Gires F, Tournois P oder aber die Dokumente US 6 222 673 B1, US 6 154 318 A sowie WO 01/05000 A1. Bei diesen Techniken wird die Frequenzabhängigkeit der Gruppenverzögerung des mit dem Filter wechselwirkenden Strahls mit Hilfe der Speicherzeit der verschiedenen Wellenpakete in der Mehrschichtstruktur kontrolliert.

Es wurden bereits verschiedene Entwurfsmethoden und Ausführungsformen von dispersiven Mehrschichtspiegeln vorgeschlagen. Quasi-analytische Methoden zur Berechnung der Schichtdicken eines dispersiven Multilayers (vgl. z.B. Matuschek N, Kärtner FX, Keller U (1999): Analytical design of double-chirped mirrors with custom-tailored dispersion characteristics. IEEE J. Quantum Electron. 35: 129-137; Szipöcs R, Köhäzi-Kis A (1997): Theory und design of chirped dielectric laser mirrors. Appl.Phys. B65: 115-135; Tempea G, Krausz F, Spielmann Ch, Ferencz K (1998): Dispersion control over 150 THz with chirped dielectric mirrors. IEEE JSTQE 4: 193-196; US 6 462 878 B1) erlauben jetzt das Design von CM-Spiegeln mit Bandbreiten von bis zu 400 nm (bei einer mittleren Wellenlänge von 780 oder 800 nm). Sowohl Spiegelpaare (Laude V. and Tournois P. (1999): Chirped-mirrorpairs for ultrabroadband dispersion control. In: Conference on Lasers and Electro-optics (CLEO/US), OSA Technical Digest Series, Optical Society of America, Washington, D.C., paper CtuR4 sowie US 6 590 925 B1) als auch CM-Spiegel mit gekeilter Vorderschicht (Matuschek N, Gallmann L, Sutter DH, Steinmeyer G, Keller U (2000): Back-side-coated chirped mirrors with ultrasmooth broadband dispersion characteristics. Appl. Phys. B 71: 509-522; Tempea G, Yakovlev V, Bakovic B, Krausz F, Ferencz K (2001): Tilted-front-interface chirped mirrors. JOSA B 18: 1747-1750; sowie WO 02/06899 A2) haben eine Kontrolle der GDD über eine ganze optische Oktave, z.B zwischen 500 nm und 1000 nm, ermöglicht. Alle diese Entwicklungen haben im Übrigen die Erweiterung der Bandbreite der dispersiven Spiegel angestrebt, ohne die Kompaktheit der mit CM-Spiegeln gebildeten Resonatoren oder Verzögerungsstrecken zu verbessern. Eine zunehmende Anzahl von industriellen und medizinischen Anwendungen erfordert jedoch die Entwicklung äußerst kompakter und stabiler Femtosekundenquellen.

Die vorliegenden Verzögerungsstrecken, auch Integrated Dispersive Delay Lines (IDDLs) genannt, ermöglichen nun eine genaue Kontrolle der GDD in Kombination mit einem Aufbau von Laserquellen, der wesentlich kompakter ist als bei Oszillatoren, die CM-Spiegel oder Prismenpaare für die GDD-Kontrolle einsetzen.

Es ist demgemäß eine besonders vorteilhafte Weiterbildung der erfindungsgemäßen Verzögerungsstrecke dadurch gekennzeichnet, dass das Glaselement an den polierten Spiegelelement-Oberflächen außenseitig mit einer für den reflektierten Laserstrahl eine vorgegebene Gruppenverzögerungsdispersion (GDD) herbeiführenden Mehrschicht-Beschichtung versehen sind. Die erfindungsgemäßen optischen Verzögerungsstrecken oder -komponenten sind somit an den reflektierenden Oberflächen (Grenzflächen) des Glaselements mit Mehrschichtinterferenzfiltern versehen, die eine Gruppenverzögerungsdispersion wie jeweils gewünscht in an sich herkömmlicher Weise einführen. In der Regel hat ein Lasersystem mit den üblichen Komponenten, wie mit einem Laserkristall, mit teildurchlässigen Spiegeln usw., eine positive GDD, und um hier eine Kompensation zu ermöglichen, sollte die Beschichtung der polierten Oberflächen des Glaselements der vorliegenden Verzögerungsstrecke eine negative GDD herbeiführen, indem sie für die verschiedenen Wellenlängen die Laserstrahlung verschieden lang speichert. Dabei wird jedoch, anders als bei einem dispersiven Spiegel oder aber auch resonanten dispersiven Spiegel (WO 01/05000 A1), das Reflexionsvermögen der reflektierenden polierten Oberflächen des Glaselements nicht verändert. Die hohe Reflektivität dieser Oberflächen ist durch die erwähnte Totalreflexion gegeben, und die durch die Beschichtungen gegebenen Mehrschichtinterferenzfilter dienen nur zur Herbeiführung einer vorgegebenen GDD. Dies steht auch im Gegensatz etwa zur in der US 6 256 434 B1 vorgeschlagenen Technik, gemäß welcher ein Laserkristall an zwei Seiten mit einer Mehrschicht-Beschichtung versehen wird, um so einen Mehrschicht-Spiegel am Kristall vorzusehen, so dass der Laserstrahl im Kristall "eingesperrt" wird, wobei überdies eine negative GDD herbeigeführt werden soll. Bei der vorliegenden Verzögerungsstrecke dient jedoch die Beschichtung nur zur Herbeiführung einer vorgegebenen GDD, wogegen die hohe Reflektivität mit Hilfe von Totalreflexion erreicht wird, und es ist in der Folge möglich, mit Hilfe der Mehrschicht-Beschichtung vergleichsweise besonders hohe GDD-Werte einzuführen und den kompakten Aufbau von optisch langen Verzögerungsstrecken zu ermöglichen. Dies wird nachfolgend anhand von konkreten Ausführungsbeispielen noch deutlicher demonstriert werden.

Es ist dabei möglich, mit Hilfe der genannten Beschichtung bei der vorliegenden Verzögerungsstrecke eine konstante oder aber eine frequenzabhängige GDD einzuführen. Insbesondere kann die eingeführte GDD negativ sein, wobei weiters im Sinne einer Über kompensation, um so auch die positive GDD aus anderen Teilen des Systems zu kompensieren, ihr Absolutbetrag größer ist als die - positive - GDD der gesamten Strecke des Laserstrahls im Glaselement ohne Beschichtung. Es ist aber selbstverständlich auch möglich, die negative GDD derart festzulegen, dass ihr Absolutbetrag praktisch genau gleich der positiven GDD der Strecke im Glaselement ist, um so exakt die GDD der vorliegenden Verzögerungkomponente auszugleichen und so einen nach außen hin bezüglich Gruppenverzögerungsdispersion neutrale Verzögerungskomponente zu erhalten. Im Übrigen ist es aber naturgemäß auch denkbar, dass der Absolutbetrag der von der Beschichtung eingeführten negativen GDD kleiner ist als die positive GDD der gesamten Glasstrecke, sollte dies für bestimmte Anwendungen als zweckmäßig angesehen werden.

Das Glaselement kann mit Vorteil aus Quarzglas (fused silica), wenn hohe Qualitätsansprüche zu erfüllen sind, bestehen, es kann aber auch aus BK7-Glas (ein unter dieser Bezeichnung bekanntes Bor-Kronglas) oder CaF2-Glas (Calciumfluorid-Glas) bestehen, wobei BK7-Glas dort vorteilhaft ist, wo Kompaktheit und Robustheit für die Anwendung der Laservorrichtung von Bedeutung sind, und CaF2-Glas sich durch einen geringen Brechungsindex auszeichnet und mit einer vorgegebenen dispersiven Beschichtung eine vergleichsweise hohe Netto-Dispersion der gesamten Verzögerungsstrecke ermöglicht.

Die Laserstrahl-Eintritts- und Austrittsflächen des Glaselements bilden bevorzugt mit dem Laserstrahl den an sich bekannten Brewsterwinkel. Die Eintritts- bzw. Austrittsflächen können aber auch mit einer an sich bekannten Antireflexionsbeschichtung versehen werden. Auf diese Weise ist es möglich, unerwünschte, den Wirkungsgrad vermindernde Reflexionen an diesen Flächen zu verhindern.

Die Mehrschicht-Beschichtung an den spiegelnden polierten Oberflächen des Glaselements können beispielsweise mit $SiO_2$ und $TiO_2$-Schichten oder mit $SiO_2$ und $Ta_2O_5$- Schichten ausgeführt werden, wobei sich diese Materialien insbesondere bei Anwendungen in der Multi-Photonen-Mikroskopie, Terahertzerzeugung, Spektroskopie, aber auch Materialbearbeitung hinsichtlich einer stabilen Laserstrahlerzeugung als vorteilhaft gezeigt haben. Im Hinblick auf eine günstige Beschichtungstechnik haben sich aber auch $SiO_2$- und $Nb_2O_5$- Schichten als günstig erwiesen.

Die vorliegende Verzögerungsstrecke lässt sich mit Vorteil in Laserresonatoren für Kurzpuls-Laserzeugung bzw. in Kurzpuls-Laservorrichtung einsetzen, wobei es insbesondere von Vorteil ist, wenn mehrere derartige Verzögerungsstrecken oder Verzögerungskomponenten eingesetzt werden, da dadurch ein besonders kompakter Aufbau des Resonators bzw. der Laservorrichtung, mit vergleichsweise außerordentlich geringen Abmessungen, ermöglicht wird.

Kurzbeschreibung der Erfindung

Die Erfindung wird nun nachfolgend anhand von bevorzugten Ausführungsbeispielen, auf die sie jedoch nicht beschränkt sein soll, und unter Bezugnahme auf die Zeichnung noch weiter erläutert. Es zeigen:

Fig. 1 ein Schema für einen Aufbau einer Kurzpuls-Laservorrichtung mit einer nur ganz schematisch eingezeichneten Verzögerungsstrecke;
Fig. 2 schematisch in einer Längsdarstellung eine Verzögerungsstrecke gemäß der Erfindung;
Fig. 3 einen schematischen Querschnitt durch eine derartige Glaselement-Verzögerungsstrecke, gemäß zur Linie III-III in Fig. 2;
Fig 3A einen schematischen Querschnitt ähnlich Fig. 3 durch eine modifizierte Glaselement-Verzögerungsstrecke;
Fig. 4 in einem Diagramm die bei Verwendung einer solchen Verzögerungsstrecke mit Mehrschicht-Beschichtung zwecks GDD-Kompensation erzielbare negative GDD (in fs²) in Abhängigkeit von der Wellenlänge (in nm);

und die Figuren 5 und 6 schematisch zwei mögliche Anordnungen von Verzögerungsstrecken in Laserresonatoren bzw. Kurzpuls-Laservorrichtungen.

Beschreibung der Erfindung

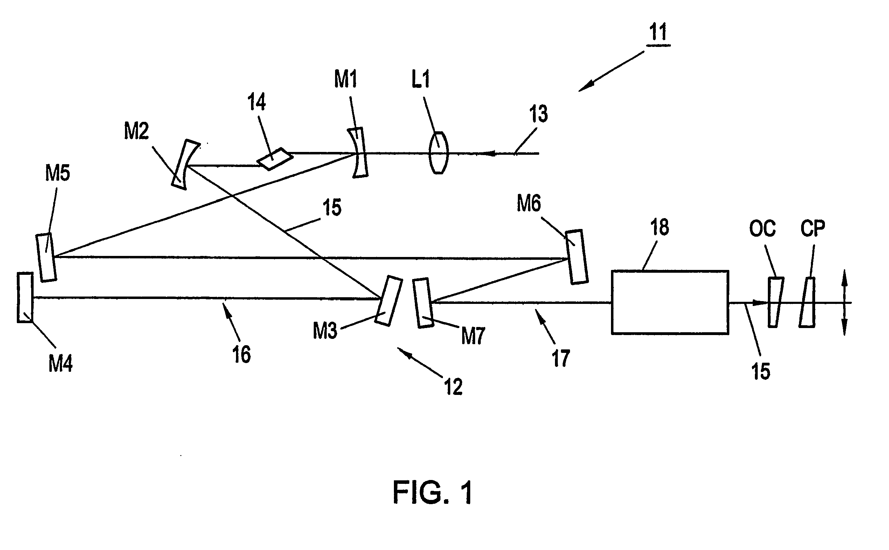

In Fig.1 ist schematisch eine an sich herkömmliche Kurzpuls-Laservorrichtung 11 veranschaulicht, in der für die Kurzpulserzeugung z.B. das an sich bekannte "Kerr-lens mode locking"-Prinzip verwendet wird.

Die Laservorrichtung 11 weist gemäß Fig. 1 einen Resonator 12 auf, dem ein Pumpstrahl 13, z.B. ein Argonlaserstrahl, zugeführt wird. Der Pumplaser selbst, z.B. ein Argonlaser, ist der Einfachheit halber in Fig. 1 weggelassen und gehört dem Stand der Technik an.

Nach Durchlaufen einer Linse L1 und eines dichroitischen Spiegels M1 regt der Pumpstrahl 13 einen Laserkristall 14 an, im vorliegenden Beispiel einen Titan:Saphir(Ti:S)-Festkörperlaserkristall. Der dichroitische Spiegel M1 ist für den Pumpstrahl 13 durchlässig, jedoch hochreflektierend für den Ti:S-Laserstrahl 15. Dieser Laserstrahl 15, der Resonatorstrahl, trifft dann auf einen Laserspiegel M2 auf und wird von diesem zu einem Laserspiegel M3 reflektiert. Dieser Laserspiegel M3 reflektiert den Laserstrahl wieder zu einem Laserspiegel M4, von wo der Laserstrahl 15 zu den Laserspiegeln M3, M2 und M1 zurück reflektiert wird, wobei er den Laserkristall 14 ein zweites Mal durchläuft. Dieser Resonatorteil mit den Spiegeln M2, M3 und M4 bildet einen ersten Resonatorarm 16, der im gezeigten Beispiel Z-förmig ist.

Vom Spiegel M1 wird der Laserstrahl 15 dann zu einem Laserspiegel M5 und von diesem zu einem Laserspiegel M6 sowie zu einem weiteren Laserspiegel M7 reflektiert, wodurch ein zweiter, hier ebenfalls Z-gefalteter Resonatorarm 17 gebildet ist. Vom Laserspiegel M7 gelangt der Laserstrahl 15 in eine in Fig. 1 nur schematisch gezeichnete Verzögerungsstrecke 18 und von dieser zu einem als Auskoppler fungierenden Endspiegel OC. Über diesen Auskoppel-Endspiegel OC wird ein Teil des Laserstrahls 15 unter Vorsehen einer Kompensationsmöglichkeit ausgekoppelt, wobei ein Kompensationsplättchen CP sowie nicht näher gezeigte Spiegel in Dünnschichttechnik für eine Dispersionskompensation sowie dafür sorgen, dass keine unerwünschten Reflexionen in Richtung Laserresonator 12 auftreten.

Der Laserkristall 14 ist ein planparalleler Körper, welcher optisch nicht-linear ist und ein Kerrelement bildet, welches für höhere Feldstärken des Laserstrahls 15 eine größere wirksame optische Dicke besitzt, hingegen eine geringere wirksame optische Dicke aufweist, wenn die Feldstärke bzw. Intensität des Laserstrahls geringer ist. Dieser an sich bekannte Kerreffekt wird zur Selbstfokussierung des Laserstrahls 15 ausgenutzt, d.h. der Laserkristall 14 bildet für den Laserstrahl 15 eine Fokussierungslinse. Die Modenverkopplung kann weiters in an sich herkömmlicher Weise z.B. mit Hilfe einer Blende (vgl. z.B. AT 405 992 B) realisiert werden; es wäre überdies auch denkbar, einen der Endspiegel, z.B. M4, als sättigbaren Bragg-Reflektor auszubilden und so zur Modenverkopplung einzusetzen.

Die Spiegel M1, M2 ... M7 können in Dünnschichttechnik ausgeführt sein, d.h. sie sind je aus vielen Schichten aufgebaut, die bei der Reflexion des eine große spektrale Bandbreite aufweisenden ultrakurzen Laserpulses ihre Funktion ausüben. Die verschiedenen Wellenlängenkomponenten des Laserstrahls 15 dringen unterschiedlich tief in die Schichten des jeweiligen Spiegels ein, bevor sie reflektiert werden. Dadurch werden die verschiedenen Wellenlängenkomponenten verschieden lang am jeweiligen Spiegel verzögert; die kurzwelligen Komponenten werden weiter außen (d.h. zur Oberfläche hin) reflektiert, die langwelligen Anteile hingegen tiefer im Spiegel. Dadurch werden die langwelligen Komponenten gegenüber den kurzwelligen Komponenten zeitlich verzögert. Auf diese Weise wird in bekannter Weise eine Dispersionskompensation insofern erhalten, als im Zeitbereich besonders kurze Pulse (vorzugsweise im Bereich von 10 Femtosekunden und darunter) ein breites Frequenzspektrum besitzen. Dies kommt daher, dass die verschiedenen Frequenzkomponenten des Laserstrahls 15 im Laserkristall 14 einen unterschiedlichen Brechungsindex "sehen", d.h. die optische Dicke des Laserkristalls 14 ist für die verschiedenen Frequenzkomponenten verschieden groß, und die verschiedenen Frequenzkomponenten werden daher beim Durchlaufen des Laserkristalls 14 verschieden verzögert. Diesem Effekt kann durch die genannte Dispersionskompensation an den Dünnschicht-Laserspiegeln M1, M2 ... M7 begegnet werden.

Soweit vorstehend beschrieben, handelt es sich um einen an sich herkömmlichen Aufbau eines Kurzpulslasers mit Modenverkopplung (vgl. z.B. WO 03/098314 A2), und eine detailliertere Beschreibung desselben kann sich daher erübrigen.

Im Betrieb wird bei jedem Umlauf des Laserstrahls 15 wie bereits erwähnt ein Teil des Laserpulses mit Hilfe des Auskopplers, d.h. Endspiegels OC, ausgekoppelt. Um nun die gewünschte Umlaufzeit und damit Repetitionsrate auch bei kleineren Abmessungen des gebildeten Resonators zu erzielen, wird die "Länge", d.i. die optische Länge des Laserresonators 12 durch den Einbau der Verzögerungsstrecke 18 vergrößert.

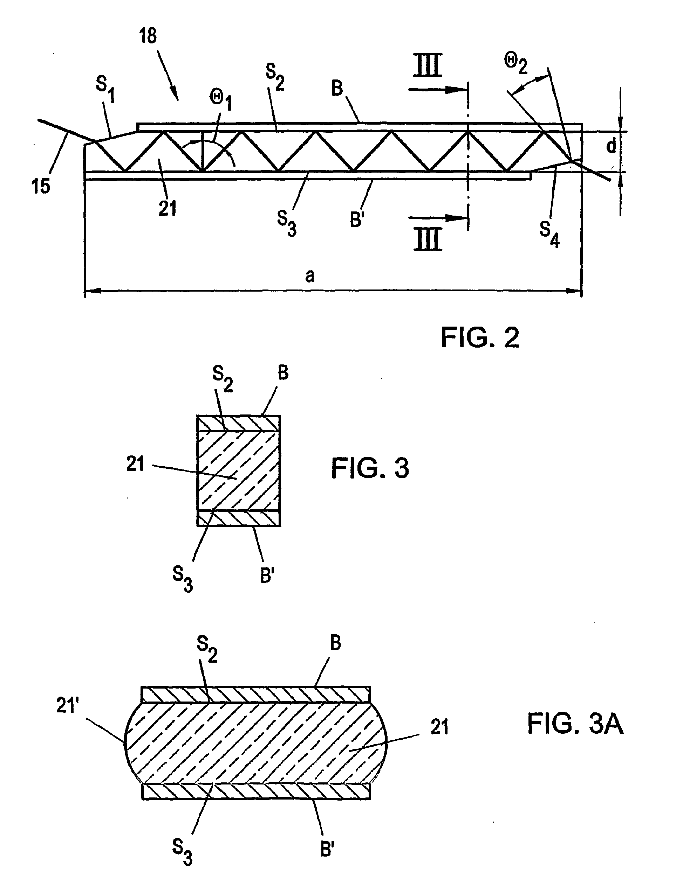

Dabei werden Mehrfachreflexionen vorgesehen, jedoch auf andere Art und Weise als bei einer Kurzpuls-Laservorrichtung, die in bekannter Weise mit einem Teleskop als Verzögerungsstrecke ausgerüstet ist (WO 03/098314 A2). Die Erfindung nützt dabei den Effekt der Totalreflexion aus, wie nachfolgend anhand der Figuren 2 und 3 erläutert wird, in denen eine zumindest derzeit als besonders bevorzugte Ausführungsform einer Verzögerungsstrecke 18 gezeigt ist.

Beim Übergang eines Lichtstrahls (Laserstrahls) von einem optisch dichteren Medium zu einem optisch dünneren Medium tritt bei entsprechend schrägem Einfall des Strahles eine Totalreflexion auf. Totalreflexion wurde bereits in Laservorrichtungen eingesetzt, um die Wechselwirkungslänge zwischen dem Laserstrahl und dem Laserkristall zu vergrößern bzw. eine bessere Strahlqualität zu erreichen (vgl. US 6 658 036 B1 und US 2004/0052284 A1).

Der Mindestwinkel, für den eine Totalreflexion an der Grenzfläche zwischen zwei Medien mit Brechzahlen $n_i$ bzw. $n_t$ stattfindet, wird als kritischer Winkel $\theta_c$ bezeichnet und lässt sich als

$$\theta_c = \arcsin(n_t/n_i)$$

ausdrücken. Ein Laserstrahl 15, der über eine schräge Eintrittsfläche S1 (s. Fig. 2) in ein Glaselement 21, z.B. in einen Glasstab oder in ein Glasplättchen, so eingekoppelt wird, dass er mit den - bevorzugt parallelen - Oberflächen S2, S3 des Glaselements 21 einen Winkel $\theta_1 > \theta_c$ bildet, wird aufgrund von Totalreflexion im Glaselement 21 so lange propagieren, bis er auf eine entsprechend schräge Austrittsfläche S4 unter einem Winkel $\theta_2 < \theta_{crit}$ trifft, so dass er - ohne neuerliche Totalreflexion - austritt. Der Strahl 15 propagiert somit über eine optische Länge $L = a/\sin(\theta_1)$, die um Faktor $1/\sin(\theta_1)$ größer ist als die physische Länge a des Glaselements 21.

Als Glaselement 21 kann selbstverständlich auch anstatt eines Glasstabes, wie in Fig. 3 gezeigt, ein Glaselement mit etwas anderer Form eingesetzt werden, wie etwa mit einer Plättchenform, wie bereits vorstehend angedeutet, und wie in Fig. 3A im Querschnitt gezeigt. Dabei ist es auch möglich, die Seitenflächen (an den Schmalseiten) des Glaselements 21 anstatt gerade und rechtwinkelig bogenförmig zu gestalten, wobei andererseits auch das in Fig. 3 im Querschnitt gezeigte Glasstab-Glaselement 21 entsprechend bombierte Seitenflächen aufweisen kann.

Laserresonatoren müssen wie erwähnt eine vorgegebene optische Länge $L_r = c_0/(2f_r)$ aufweisen, um eine vorgegebene Wiederholfrequenz $f_r$ zu erreichen. Die physikalische Länge eines Resonators kann nun gegenüber einem Resonator mit Luftpropagationsstrecken, bei dem die optische Länge und die physikalische Länge praktisch gleich sind, um ein Faktor von ca. 1,45 (dem Brechungsindex von gängigen Gläsern entsprechend) reduziert werden, wenn die Verzögerungsstrecke 18 nicht aus einer Luftstrecke, sondern aus dem Glaselement 21 besteht. Diese physikalische Länge wird gemäß einem weiteren Faktor $1/\sin(\theta_1)$ reduziert, weil der Strahl 15 nicht gerade entlang des Glasstabs 21 propagiert, sondern zwischen dessen Oberflächen S2, S3 zufolge Totalreflexion hin und her reflektiert wird, wie dies in Fig. 2 schematisch veranschaulicht ist.

Um eine solche Verzögerungsstrecke 18 für den Aufbau kompakter Kurzpulslaseroszillatoren (insbesondere Femtosekundenlaseroszillatoren) mit besonderem Vorteil einsetzen zu können, sollte sie eine negative Gruppenverzögerungsdispersion (GDD) aufweisen, um die positive GDD der sonstigen Laserkomponenten (Laserkristall 14, teildurchlässige Spiegel M1, OC usw.) auszugleichen. Optische Gläser führen jedoch eine positive GDD bei der Wellenlänge der meisten Kurzpulslaser ein; z.B. führen die meisten gängigen optischen Gläser bei 800 nm, der mittleren Wellenlänge von Ti:Saphir-Lasern, eine GDD von 30 $fs^2$/mm bis 50$fs^2$/mm ein. Die optische Verzögerungsstrecke 18 gemäß Fig. 2 und 3, d.h. das Glaselement 21, ist nun mit einem Mehrschichtinterferenzfilter, d.h. einer Mehrschicht-Beschichtung B, B', an den einander gegenüberliegenden reflektierenden Oberflächen S2, S3 versehen: diese Mehrschicht-Beschichtungen B, B' führen eine negative GDD herbei, indem sie für die verschiedenen Wellenlängen die Strahlung für verschieden lange Zeiten "speichern". Im Gegensatz zu resonanten dispersiven Spiegeln (vgl. z.B. WO 01/05000 A1) verändern diese Mehrschichtinterferenzfilter die Reflektivität (d.i. das Reflexionsvermögen) der Oberflächen S2, S3 jedoch nicht. Da die hohe Reflektivität der Oberflächen S2, S3 durch die beschriebene Totalreflexion gegeben ist, dienen die Mehrschichtinterferenzfilter B, B' nur zur Herbeiführung einer vorgegebenen GDD. Wenn die Mehrschicht-Beschichtungen B, B' nur der Herbeiführung einer vorgegebenen GDD dienen (und die hohe Reflektivität mittels Totalreflexion erreicht wird), kann die Beschichtung B, B', wie im folgenden Beispiel demonstriert, überdies viel höhere GDD-Werte einführen und dadurch den Aufbau von optisch langen Verzögerungsstrecken aus Glas ohne Nachteile ermöglichen, abgesehen von einer GDD-Kompensation für andere Komponenten des Laserresonators. Die GDD der Beschichtung B, B' kann demgemäß, wie durchgeführte Berechnungen zeigen, eine positive GDD der Glas-Propagationsstrecke ohne Probleme teilweise oder gänzlich kompensieren oder sogar überkompensieren.

Nachfolgend wird ein Beispiel für einen solchen Beschichtungs-Aufbau angeführt, wobei die aufeinander folgenden Schichten, beginnend am Substrat, d.h. Glasstab 21, mit ihren chemischen Formeln sowie ihre Schichtdicken in nm angegeben sind:

| | |
|---|---|
| $Nb_2O_5$ | 195,52 |
| $SiO_2$ | 197,82 |
| $Nb_2O_5$ | 96,65 |
| $SiO_2$ | 386,25 |
| $Nb_2O_5$ | 112,17 |
| $SiO_2$ | 154,91 |
| $Nb_2O_5$ | 71,20 |
| $SiO_2$ | 211,83 |
| $Nb_2O_5$ | 180,59 |
| $SiO_2$ | 282,06 |
| $Nb_2O_5$ | 91,45 |
| $SiO_2$ | 194,93 |
| $Nb_2O_5$ | 76,48 |
| $SiO_2$ | 208,76 |
| $Nb_2O_5$ | 74,75 |
| $SiO_2$ | 96,33 |

(fortgesetzt)

| | |
|---|---|
| $Nb_2O_5$ | 64,15 |
| $SiO_2$ | 185,78 |
| $Nb_2O_5$ | 128,90 |
| $SiO_2$ | 494,08 |
| $Nb_2O_5$ | 123,41 |
| $SiO_2$ | 172,20 |
| $Nb_2O_5$ | 79, 23 |
| $SiO_2$ | 156,87 |
| $Nb_2O_5$ | 56,39 |
| $SiO_2$ | 149,73 |
| $Nb_2O_5$ | 89,63 |
| $SiO_2$ | 212,65 |
| $Nb_2O_5$ | 193,54 |
| $SiO_2$ | 374,60 |
| $Nb_2O_5$ | 109,11 |
| $SiO_2$ | 182,27 |
| $Nb_2O_5$ | 95,36 |
| $SiO_2$ | 173,74 |
| $Nb_2O_5$ | 90,61 |
| $SiO_2$ | 155,99 |
| $Nb_2O_5$ | 65,80 |
| $SiO_2$ | 138,98 |
| $Nb_2O_5$ | 95,78 |
| $SiO_2$ | 263,92 |
| $Nb_2O_5$ | 63,85 |
| $SiO_2$ | 154,01 |
| $Nb_2O_5$ | 115,68 |
| $SiO_2$ | 203,93 |
| $Nb_2O_5$ | 95,38 |
| $SiO_2$ | 185,78 |
| $Nb_2O_5$ | 92,00 |
| $SiO_2$ | 183,01 |
| $Nb_2O_5$ | 88,57 |
| $SiO_2$ | 176,82 |
| $Nb_2O_5$ | 83,01 |
| $SiO_2$ | 169,79 |
| $Nb_2O_5$ | 81, 95 |
| $SiO_2$ | 174,18 |
| $Nb_2O_5$ | 91, 47 |
| $SiO_2$ | 196,06 |
| $Nb_2O_5$ | 82, 37 |
| $SiO_2$ | 214,89 |
| $Nb_2O_5$ | 117,70 |
| $SiO_2$ | 251,14 |
| $Nb_2O_5$ | 189, 66 |

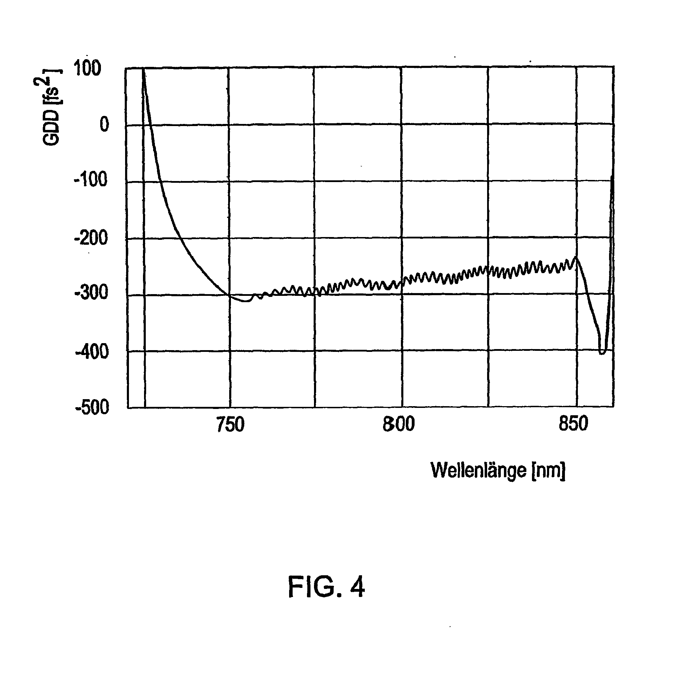

Die oben angeführte Schichtenreihenfolge bewirkt eine GDD von -275 $fs^2$ pro Reflexion und kompensiert (pro Reflexion) die GDD und TOD (Third Order Dispersion - 3. Ableitung der spektralen Phase nach der Kreisfrequenz) einer Propagationsstrecke von 7,7 mm Quarzglas über eine Bandbreite von 100 nm. Die zugehörige GDD gemäß Fig. 4 wurde unter der Annahme eines Einfallwinkels von 45° ($> θ_c$) an einer Quarzglas/Luft-Grenzfläche berechnet.

Wenn die in Fig. 2 dargestellte Verzögerungsstrecke 18 eine Dicke d = 5 mm und eine Länge a = 70 mm hat, und wenn der Laserstrahl-Einfallswinkel $θ_1$ = 45° ist, dann beträgt die gesamte physische Weglänge im Glasstab 21 ungefähr 92 mm entsprechend einer optischen Weglänge von ca. 133 mm und einer Verzögerung von 44,4 ns. Um dieselbe Verzögerung einzuführen, müsste eine gerade Propagationsstrecke in Luft um einen Faktor 1,9 länger sein, verglichen mit der Länge a der integrierten Verzögerungsstrecke 18. Wenn ein Laserpuls (insbesondere ein Femtosekundenlaserpuls) in dieser Verzögerungsstrecke 18 propagiert, wird die Pulsdauer am Ausgang (Austrittsfläche S4) der Verzögerungsstrecke 18 gleich der Eingangspulsdauer, vorausgesetzt dass die GDD der Verzögerungsstrecke 18 über die gesamte spektrale Breite des Pulses gleich Null ist. Um dies zu erreichen, werden die reflektierenden Oberflächen S2, S3 mit den erwähnten Mehrschichtinterferenzfilter-Beschichtungen B, B' versehen, die die positive GDD des Glasmaterials des Glaselements 21 kompensieren. Für die Verzögerungsstrecke in Fig. 2 beträgt die Gesarntdispersion der 92-mm-langen Glasstrecke 3309 $fs^2$ (unter der Annahme, dass der Glasstab 21 aus Quarzglas besteht). Daher sollen die Beschichtungen B, B' auf den Oberflächen S2, S3 pro Reflexion eine GDD von ca. - 275 $fs^2$ herbeiführen. Eine Beschichtung mit den vorstehend beispielsweise angeführten Schichten und Schichtdicken kann diese GDD einführen (wie in Fig. 4 dargestellt) und zusätzlich auch die Dispersion dritter Ordnung über 100 nm kompensieren.

Die Mehrschicht-Beschichtungen B, B' verändern bei der vorliegenden Verzögerungskomponente 18 nicht die Reflektivität der Oberflächen S2, S3 (die aufgrund der Totalreflexion 100 % beträgt), sondern bewirken lediglich eine Frequenzabhängigkeit der Gruppenverzögerung der reflektierten Lichtimpulse. Dies wird erreicht, indem verschiedene Frequenzkomponenten verschiedene Speicherzeiten in der Mehrschicht-Beschichtung B, B' aufweisen. Es sei jedoch nochmals betont, dass die hier vorgesehenen dispersiven Beschichtungen, im Gegensatz zu den an sich bekannten dispersiven Beschichtungen, die Reflektivität der Oberflächen S2, S3 auf denen sie aufgebracht werden, nicht beeinflussen (da diese Reflektivität bereits durch Totalreflexion vorgegeben ist), sondern lediglich die spektrale Phase der reflektierten Pulse verändern.

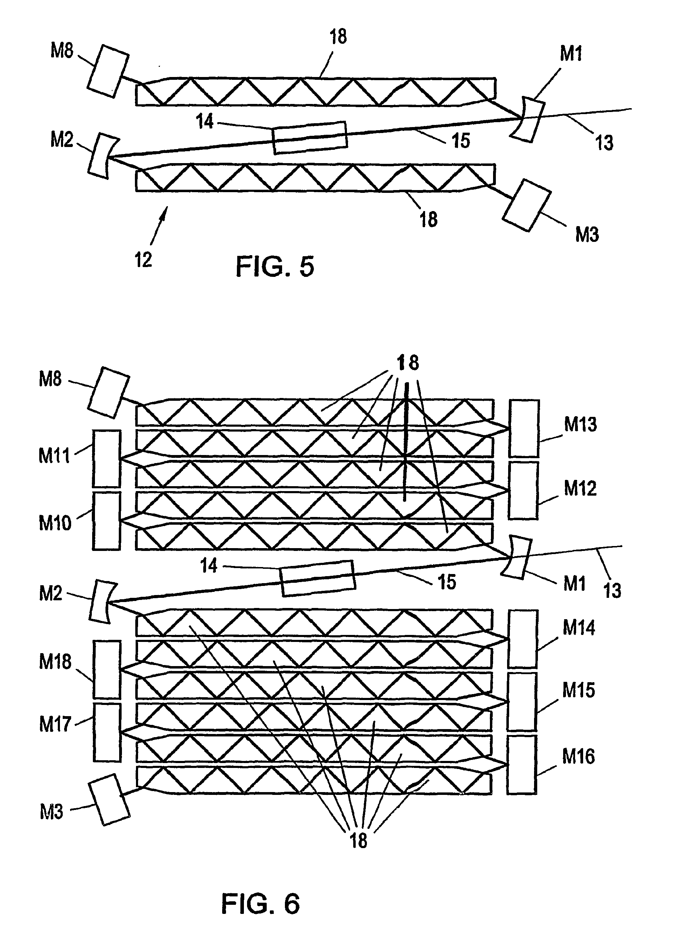

In den Fig. 5 und 6 wird die Anwendung der vorliegenden integrierten dispersiven optischen Verzögerungsstrecke in Laseroszillatoren beispielhaft veranschaulicht, wobei aber die Erfindung selbstverständlich nicht auf diese Ausführungen beschränkt ist.

Fig. 5 zeigt einen Laseroszillator, d.h. Resonator 12, der einen Laserkristall 14, zwei integrierte dispersive Verzögerungsstrecken 18 und vier Spiegel M1, M2, M3, M8 aufweist. Der aus dem Pumpstrahl 13 hergeleitete Laserstrahl 15 propagiert zwischen den Oberflächen (S2, S3 in Fig. 2, 3) der zwei Verzögerungsstrecken 18 und wird mittels der zwei gekrümmten Spiegel M1 und M2 im Laserkristall 14 fokussiert bzw. refokussiert. Der Spiegel M1 weist eine hohe Transmission bei der Wellenlänge des Pumplaseres (Strahl 13) auf und ermöglicht somit die Einkopplung des Pumpstrahls 13 in den Laserkristall 14. Der Laserkristall 14 wurde in Fig. 5 nur ganz schematisch dargestellt; es kann auch ein Kristall, dessen spezielle Geometrie die Bildung des Brewster-Winkels zwischen dem Laserstrahl 15 und den Kristalloberflächen ermöglicht, eingesetzt werden. Die Resonator-Länge und somit die Wiederholfrequenz des Lasers sowie auch die Stabilitätsbedingungen des Resonators 12 bestimmen die Länge der zwei Verzögerungsstrecken 18. Einer der zwei Endspiegel M3 oder M8 weist eine geringe (typisch zwischen 1 % und 30 %) Transmission im spektralen Bereich des Laserstrahls 15 auf und ermöglicht so die Auskopplung eines entsprechenden Energieanteils des Laserstrahls 15 aus dem Resonator 12.

Der in Fig. 6 dargestellte Laserresonator 12 unterscheidet sich vom in Fig. 5 dargestellten Laser, indem jeder Resonatorarm aus mehreren integrierten Verzögerungsstrecken 18 besteht. Die Spiegel M10 bis M18 realisieren die Einkopplung von einer Verzögerungsstrecke in die nächste Verzögerungsstrecke. Der Laserstrahl 15 propagiert wiederum jeweils zwischen den Oberflächen der Verzögerungsstrecken 18 unter mehrfacher Totalreflexion und wird mittels der zwei gekrümmten Spiegel M1 und M2 in den Laserkristall 14 fokussiert bzw. refokussiert. Der Spiegel M1 weist eine hohe Transmission bei der Wellenlänge des Pumplasers auf und ermöglicht somit die Einkopplung des Pumpstrahls 13 in den Laserkristall 14. Der Laserkristall 14 ist wiederum nur schematisch dargestellt und er kann auch ein Kristall sein, dessen spezielle Geometrie die Bildung des Brewster-Winkels zwischen dem Laserstrahl 15 und den Kristalloberflächen ermöglicht. Einer der zwei Endspiegel M3 oder M8 weist wieder eine geringe (typisch zwischen 1 % und 30 %) Transmission im spektralen Bereich des Laserstrahls 15 auf, um die Auskopplung eines entsprechenden Energieanteils des Laserstrahls 15 aus dem Resonator 12 zu ermöglichen.

**Patentansprüche**

1.   Mehrfachreflexions-Verzögerungsstrecke (18) für einen Laserstrahl (15), mit Spiegelelementen zur mehrfachen Reflexion des Laserstrahls, um die Dimensionen eines Laserresonators (12) bei vorgegebener optischer Länge zu reduzieren, **dadurch gekennzeichnet, dass** die Spiegelelemente durch zwei einander gegenüberliegende, sich längserstreckende polierte Oberflächen (S2, S3) eines sich in einer Richtung erstreckenden Glaselements (21) gebildet sind, das weiters eine polierte Laserstrahl-Eintrittsfläche (S1) sowie eine polierte Laserstrahl-Austrittsfläche (S4) aufweist, wobei sich die Spiegelelement-Oberflächen (S2, S3) des Glaselements (21) zwischen der Eintrittsfläche (S1) und der Austrittsfläche (S4) befinden und mit dem Laserstrahl (15) einen Winkel ($\theta_1$) bilden, der zumindest gleich groß dem kritischen Winkel ($\theta_c$) für Totalreflexion ist, wogegen die Eintrittsfläche (S1) und die Austrittsfläche (S4) mit dem Laserstrahl (15) des Glaselements einen Winkel ($\theta_2$) definieren, der kleiner als der kritische Winkel ($\theta_c$) für Totalreflexion ist.

2. Verzögerungsstrecke nach Anspruch 1, **dadurch gekennzeichnet, dass** die polierten Spiegelelement-Oberflächen (S2, S3) des Glaselements (21) zueinander parallel sind.

3. Verzögerungsstrecke nach Anspruch 2, **dadurch gekennzeichnet, dass** die polierten Spiegelelement-Oberflächen (S2, S3) des Glaselements (21) einen Abstand voneinander aufweisen, der zumindest das 30-fache der mittleren Wellenlänge des Laserstrahls im Glaselement (21) beträgt.

4. Verzögerungsstrecke nach einem der Ansprüche 1 bis 3, **dadurch gekennzeichnet**, das die Laserstrahl-Eintrittsfläche (S1) und die Laserstrahl-Austrittsfläche (S4) des Glaselements (21) zueinander parallel sind.

5. Verzögerungsstrecke nach einem der Ansprüche 1 bis 4, **dadurch gekennzeichnet, dass** das Glaselement (21) an den polierten Spiegelement-Oberflächen (S2, S3) außenseitig mit einer für den reflektierten Laserstrahl eine vorgegebene Gruppenverzögerungsdispersion (GDD) herbeiführenden Mehrschicht-Beschichtung (B, B') versehen ist.

6. Verzögerungsstrecke nach Anspruch 5, **dadurch gekennzeichnet, dass** die von der Mehrschicht-Beschichtung (B, B') des Glaselements (21) herbeigeführte Gruppenverzögerungsdispersion konstant ist.

7. Verzögerungsstrecke nach Anspruch 5, **dadurch gekennzeichnet, dass** die von der Mehrschicht-Beschichtung (B, B') des Glaselements (21) herbeigeführte Gruppenverzögerungsdispersion frequenzabhängig ist.

8. Verzögerungsstrecke nach einem der Ansprüche 5 bis 7, **dadurch gekennzeichnet, dass** die von der Mehrschicht-Beschichtung (B, B') des Glaselements (21) herbeigeführte Gruppenverzögerungsdispersion negativ und im Absolutbetrag gleich der oder größer als die positive(n) Gruppenverzögerungsdispersion der gesamten Strecke des Laserstrahls (15) im Glaselement (21) ohne Mehrschicht-Beschichtung ist.

9. Verzögerungsstrecke nach einem der Ansprüche 5 bis 8, **dadurch gekennzeichnet, dass** die Mehrschicht-Beschichtung (B, B') des Glaselements (21) mit $SiO_2$- und $TiO_2$-Schichten ausgeführt ist.

10. Verzögerungsstrecke nach einem der Ansprüche 5 bis 8, **dadurch gekennzeichnet, dass** die Mehrschicht-Beschichtung (B, B') des Glaselements (21) mit $SiO_2$- und $Nb_2O_5$-Schichten ausgeführt ist.

11. Verzögerungsstrecke nach einem der Ansprüche 5 bis 8, **dadurch gekennzeichnet, dass** die Mehrschicht-Beschichtung (B, B') des Glaselements (21) mit $SiO_2$- und $Ta_2O_5$-Schichten ausgeführt ist.

12. Verzögerungsstrecke nach einem der Ansprüche 1 bis 11, **dadurch gekennzeichnet, dass** das Glaselement (21) aus Quarzglas besteht.

13. Verzögerungsstrecke nach einem der Ansprüche 1 bis 11, **dadurch gekennzeichnet, dass** das Glaselement (21) aus BK7-Glas besteht.

14. Verzögerungsstrecke nach einem der Ansprüche 1 bis 11, **dadurch gekennzeichnet, dass** das Glaselement (21) aus CaF2-Glas besteht.

15. Verzögerungsstrecke nach einem der Ansprüche 1 bis 14, **dadurch gekennzeichnet, dass** die Eintritts- und Austrittsfläche (S1, S4) des Glaselements (21) mit dem Laserstrahl (15) den Brewster-Winkel bilden.

16. Verzögerungsstrecke nach einem der Ansprüche 1 bis 15, **dadurch gekennzeichnet, dass** die Eintritts- und Austrittsfläche (S1, S4) des Glaselements (21) mit einer Antireflexionsbeschichtung versehen sind.

17. Verzögerungsstrecke nach einem der Ansprüche 1 bis 16, **dadurch gekennzeichnet, dass** das Glaselement (21) durch einen Glasstab gebildet ist.

18. Laserresonator (12) für Kurzpulslasererzeugung mit einem Laserkristall (14) und Laserspiegeln (Mi) sowie mit zumindest einer Verzögerungsstrecke (18) nach einem der Ansprüche 1 bis 17.

19. Kurzpuls-Laservorrichtung mit vorzugsweise passiver Modenverkopplung, mit einem Resonator (12), der einen Laserkristall (14) sowie mehrere Laserspiegel (Mi) aufweist, **dadurch gekennzeichnet, dass** im Resonator (12) zumindest eine Verzögerungsstrecke (18) nach einem der Ansprüche 1 bis 17 vorgesehen ist.

**Claims**

1. A multiple-reflection delay line member (18) for a laser beam (15), including mirror elements for the multiple reflection of the laser beam to reduce the dimensions of a laser resonator (12) at a predetermined optical length, **characterized in that** the mirror elements are comprised of two oppositely arranged, longitudinally extending polished surfaces (S2, S3) of a glass element (21) which extends in one direction and further comprises a polished laser beam entry surface (S1) as well as a polished laser beam exit surface (S4), wherein the mirror element surfaces (S2, S3) of the glass element (21) are located between the entry surface (S1) and the exit surface (S4) and, with the laser beam (15), form an angle $(\theta_1)$ that at least equals the critical angle $(\theta_c)$ for total reflection, whereas the entry surface (S1) and the exit surface (S4) with the laser beam (15) of the glass element define an angle $(\theta_2)$ that is smaller than the critical angle $(\theta_c)$ for total reflection.

2. The delay line member according to claim 1, **characterized in that** the polished mirror element surfaces (S2, S3) of the glass element (21) are parallel to each other.

3. The delay line member according to claim 2, **characterized in that** the polished mirror element surfaces (S2, S3) of the glass element (21) have a relative distance of at least thirty times the mean wavelength of the laser beam in the glass element (21).

4. The delay line member according to any one of claims 1 to 3, **characterized in that** the laser beam entry surface (S1), and the laser beam exit surface (S4), of the glass element (21) are parallel to each other.

5. The delay line member according to any one of claims 1 to 4, **characterized in that** the glass element (21), on the polished mirror element surface outer sides, is provided with a multilayer coating (B, B') that causes a given group delay dispersion (GDD) for the reflected laser beam.

6. The delay line member according to claim 5, **characterized in that** the group delay dispersion caused by the multilayer coating (B, B') of the glass element (21) is constant.

7. The delay line member according to claim 5, **characterized in that** the group delay dispersion caused by the multilayer coating (B, B') of the glass element (21) is frequency-dependent.

8. The delay line member according to any one of claims 5 to 7, **characterized in that** the group delay dispersion caused by the multilayer coating (B, B') of the glass element (21) is negative and in terms of absolute value is equal to or larger than the positive group delay dispersion of the overall path of the laser beam (15) in the glass element (21) without multilayer coating.

9. The delay line member according to any one of claims 5 to 8, **characterized in that** the multilayer coating (B, B') of the glass element (21) is formed with $SiO_2$ and $TiO_2$ layers.

10. The delay line member according to any one of claims 5 to 8, **characterized in that** the multilayer coating (B, B') of the glass element (21) is formed with $SiO_2$ and $Nb_2O_5$ layers.

11. The delay line member according to any one of claims 5 to 8, **characterized in that** the multilayer coating (B, B') of the glass element (21) is formed with $SiO_2$ and $Ta_2O_5$ layers.

12. The delay line member according to any one of claims 1 to 11, **characterized in that** the glass element (21) is made of quartz glass.

13. The delay line member according to any one of claims 1 to 11, **characterized in that** the glass element (21) is made of BK7 glass.

14. The delay line member according to any one of claims 1 to 11, **characterized in that** the glass element (21) is made of $CaF_2$ glass.

15. The delay line member according to any one of claims 1 to 14, **characterized in that** the entry and exit surfaces (S1, S4) of the glass element (21) form a Brewster angle with the laser beam (15).

16. The delay line member according to any one of claims 1 to 15, **characterized in that** the entry and exit surfaces (S1, S4) of the glass element (21) are provided with an antireflection coating.

17. The delay line member according to any one of claims 1 to 16, **characterized in that** the glass element (21) is comprised of a glass rod.

18. A laser resonator (12) for short-pulse laser generation, comprising a laser crystal (14) and laser mirrors (Mi) as well as at least one delay line member (18) according to any one of claims 1 to 17.

19. A short-pulse laser device with preferably passive mode locking, comprising a resonator (12) including a laser crystal (14) and a plurality of laser mirrors (Mi), **characterized in that** at least one delay line member (18) according to any one of claims 1 to 17 is provided in the resonator (12).

**Revendications**

1. Ligne à retard à réflexion multiple (18) pour un faisceau laser (15), avec des éléments réfléchissants pour la réflexion multiple du faisceau laser, afin de réduire les dimensions d'un résonateur laser (12) de longueur optique prédéfinie, **caractérisée en ce que** les éléments réfléchissants sont formés par deux surfaces (S2, S3) polies faisant face l'une à l'autre et s'étendant longitudinalement d'un élément en verre (21) s'étendant dans une direction qui présente en outre une surface d'entrée de faisceau laser (S1) polie ainsi qu'une surface de sortie de faisceau laser (S4) polie, les surfaces d'élément réfléchissant (S2, S3) de l'élément en verre (21) se trouvant entre la surface d'entrée (S1) et la surface de sortie (S4) et formant, avec le faisceau laser (15), un angle ($\theta_1$) qui est au moins égal à l'angle critique ($\theta_c$) pour la réflexion totale, tandis que la surface d'entrée (S1) et la surface de sortie (S4) définissent avec le faisceau laser (15) de l'élément en verre un angle ($\theta_2$) qui et inférieur à l'angle critique ($\theta_c$) pour la réflexion totale.

2. Ligne à retard selon la revendication 1, **caractérisée en ce que** les surfaces d'élément réfléchissant (S2, S3) polies de l'élément en verre (21) sont parallèles l'une à l'autre.

3. Ligne à retard selon la revendication 2, **caractérisée en ce que** les surfaces d'élément réfléchissant (S2, S3) polies de l'élément en verre (21) présentent un écartement qui est au moins égal à 30 fois la longueur d'onde moyenne du faisceau laser dans l'élément en verre (21).

4. Ligne à retard selon l'une quelconque des revendications 1 à 3, **caractérisée en ce que** la surface d'entrée de faisceau laser (S1) et la surface de sortie de faisceau laser (S4) de l'élément en verre (21) sont parallèles l'une à l'autre.

5. Ligne à retard selon l'une quelconque des revendications 1 à 4, **caractérisée en ce que** l'élément en verre (21) est pourvu, sur les surfaces d'éléments réfléchissants (S2, S3) polies, sur le côté extérieur, d'un revêtement multicouche (B, B') provoquant, pour le faisceau laser réfléchi, une dispersion de retard de groupe (GDD) prédéfinie.

6. Ligne à retard selon la revendication 5, **caractérisée en ce que** la dispersion à retard de groupe provoquée par le revêtement multicouche (B, B') de l'élément en verre (21) est constante.

7. Ligne à retard selon la revendication 5, **caractérisée en ce que** la dispersion à retard de groupe provoquée par le revêtement multicouche (B, B') de l'élément en verre (21) est fonction de la fréquence.

8. Ligne à retard selon l'une quelconque des revendications 5 à 7, **caractérisée en ce que** la dispersion à retard de groupe provoquée par le revêtement multicouche (B, B') de l'élément en verre (21) est négative et en valeur absolue égale ou supérieure à la dispersion à retard de groupe positive de la totalité de la ligne du faisceau laser (15) dans l'élément en verre (21) sans revêtement multicouche.

9. Ligne à retard selon l'une quelconque des revendications 5 à 8, **caractérisée en ce que** le revêtement multicouche (B, B') de l'élément en verre (21) est réalisé avec des couches de $SiO_2$ et de $TiO_2$

10. Ligne à retard selon l'une quelconque des revendications 5 à 8, **caractérisée en ce que** le revêtement multicouche (B, B') de l'élément en verre (21) est réalisé avec des couches de $SiO_2$ et $Nb_2O_5$.

11. Ligne à retard selon l'une quelconque des revendications 5 à 8, **caractérisée en ce que** le revêtement multicouche (B, B') de l'élément en verre (21) est réalisé avec des couches de $SiO_2$ et $Ta_2O_5$.

12. Ligne à retard selon l'une quelconque des revendications 1 à 11, **caractérisée en ce que** l'élément en verre (21) est en verre au quartz.

13. Ligne à retard selon l'une quelconque des revendications 1 à 11, **caractérisée en ce que** l'élément en verre (21) est en verre BK7.

14. Ligne à retard selon l'une quelconque des revendications 1 à 11, **caractérisée en ce que** l'élément en verre (21) est en verre au CaF2.

15. Ligne à retard selon l'une quelconque des revendications 1 à 14, **caractérisée en ce que** la surface d'entrée et la surface de sortie (S1, S4) de l'élément en verre (21) forment l'angle de Brewster avec le faisceau laser (15).

16. Ligne à retard selon l'une quelconque des revendications 1 à 15, **caractérisée en ce que** la surface d'entrée et la surface de sortie (S1, S4) de l'élément en verre (21) sont pourvues d'un revêtement antireflet.

17. Ligne à retard selon l'une quelconque des revendications 1 à 16, **caractérisée en ce que** l'élément en verre (21) est formé par un barreau de verre.

18. Résonateur laser (12) pour production d'un laser à impulsions courtes avec un cristal laser (14) et des miroirs laser (Mi) ainsi qu'avec au moins une ligne à retard (18) selon l'une quelconque des revendications 1 à 17.

**19.** Dispositif laser à impulsions courtes avec de préférence couplage de mode passif, avec un résonateur (12), qui comporte un cristal laser (14) ainsi que plusieurs miroirs laser (Mi), **caractérisé en ce qu'**il est prévu dans le résonateur (12) au moins une ligne à retard (18) selon l'une quelconque des revendications 1 à 17.

**FIG. 1**

EP 1 794 851 B1

FIG. 2

FIG. 3

FIG. 3A

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2003098314 A2
- US 6055261 A
- US 5734503 A
- US 6222673 B1
- US 6154318 A
- WO 0105000 A1
- US 6462878 B1
- US 6590925 B1
- WO 0206899 A2
- US 6256434 B1
- AT 405992 B
- WO 03098314 A2
- US 6658036 B1
- US 20040052284 A1

**In der Beschreibung aufgeführte Nicht-Patentliteratur**

- **Gires F ; Tournois P.** Interférometre utilisable pour la compensation d'impulsions lumineuses modulées en fréquence. *C.R. Hebd. Acad. Sci.,* 1964, vol. 258, 6112-6115
- **Matuschek N ; Kärtner FX ; Keller U.** Analytical design of double-chirped mirrors with custom-tailored dispersion characteristics. *IEEE J. Quantum Electron.,* 1999, vol. 35, 129-137
- **Szipöcs R ; Köhäzi-Kis A.** Theory und design of chirped dielectric laser mirrors. *Appl.Phys.,* 1997, vol. B65, 115-135
- **Tempea G ; Krausz F ; Spielmann Ch ; Ferencz K.** Dispersion control over 150 THz with chirped dielectric mirrors. *IEEE JSTQE,* 1998, vol. 4, 193-196
- Chirped-mirrorpairs for ultrabroadband dispersion control. **Laude V. ; Tournois P.** Conference on Lasers and Electro-optics (CLEO/US), OSA Technical Digest Series. Optical Society of America, 1999
- **Matuschek N ; Gallmann L ; Sutter DH ; Steinmeyer G ; Keller U.** Back-side-coated chirped mirrors with ultrasmooth broadband dispersion characteristics. *Appl. Phys. B,* 2000, vol. 71, 509-522
- **Tempea G ; Yakovlev V ; Bakovic B ; Krausz F ; Ferencz K.** Tilted-front-interface chirped mirrors. *JOSA B,* 2001, vol. 18, 1747-1750